# EUROPEAN PATENT APPLICATION

(11) **EP 4 718 527 A1**
(43) Date of publication of application: **01.04.2026**
(21) Application number: 24836323.6
(22) Date of filing: 03.07.2024
(51) Int. Cl.: H01M 4/36, H01M 4/525, H01M 10/052, C01G 53/00, C30B 29/22, H01M 4/505, H01M 4/02

(54) **POSITIVE ELECTRODE ACTIVE MATERIAL AND PREPARATION METHOD THEREFOR**

(30) Priority: 03.07.2023 KR 20230086034; 05.07.2023 KR 20230087326
(71) Applicant: LG Chem, Ltd., Seoul 07336 (KR)
(72) Inventor: KO, Young Min, Daejeon 34122 (KR); KIM, Dong Hwan, Daejeon 34122 (KR); JUN, Tae Hwan, Daejeon 34122 (KR); KIM, Jin Sol, Daejeon 34122 (KR)
(74) Representative: Hoffmann Eitle
(86) International application number: PCT/KR2024/009374
(87) International publication number: WO 2025/009875

(57) **Abstract**

The present invention relates to a positive electrode active material which may consequently improve performance of a battery including the same by improving performance and stability of a lithium-rich oxide, wherein the present invention relates to a positive electrode active material which includes a layer-structured lithium-rich transition metal oxide including both a Li₂MnO₃ phase and a LiMO₂ phase (where M is an element including at least one selected from nickel (Ni), cobalt (Co), and manganese (Mn)); and a coating layer including boron and carbon which is formed on the lithium-rich transition metal oxide, and satisfies at least one of conditions (1) to (3), a method of preparing the same, and a positive electrode and a lithium secondary battery which include the same.
- Condition (1): An atomic ratio (B/Mn) of boron (B) to manganese (Mn) present on a surface, which is analyzed by **X-**ray photoelectron spectroscopy (XPS), is in a range of 1 to 5
- Condition (2): An intensity ratio (I_{Carbonate,1}:I_{C-C}) of a peak (I_{Carbonate,1}) at 287.5 eV to 288.5 eV to a peak (I_{C-C}) at 284 eV to 285 eV in an XPS spectrum of the surface is in a range of 0.05:1 to 0.15:1
- Condition (3): An intensity ratio (I_{Carbonate,2}:I_{C-C}) of a peak (I_{Carbonate,2}) at 288.6 eV to 290.5 eV to the peak (I_{C-C}) at 284 eV to 285 eV in the XPS spectrum of the surface is in a range of 0.05:1 to 0.15:1

## Description

### TECHNICAL FIELD

### Cross-reference to Related Applications

This application claims priority from Korean Patent Application Nos. 10-2023-0087326, filed on July 5, 2023, and 10-2023-0086034, filed on July 3, 2023, the disclosures of which are incorporated by reference herein.

### Technical Field

The present invention relates to a positive electrode active material, a method of preparing the same, and a positive electrode and a lithium secondary battery which include the same.

### BACKGROUND ART

A lithium secondary battery is composed of four major components such as a positive electrode, a negative electrode, a separator, and an electrolyte. Among them, a positive electrode active material included in the positive electrode is a material that plays a major role in determining capacity, output, and lifetime of the battery. An improvement in performance of the positive electrode active material is essential in order for the lithium secondary battery to have high energy density, output, and lifetime, and, as a result, a significant amount of research has been conducted recently to develop a high-performance positive electrode active material.

A lithium-rich oxide (Li rich layered oxide), a type of the positive electrode active material, is a mixed phase in which a Li₂MnO₃ phase and a LiMO₂ (M = nickel (Ni), manganese (Mn), cobalt (Co)) phase are mixed, wherein it has a characteristic of providing a very high capacity of 250 mAh/g at a high operating voltage (>3.5 V vs. Li/Li⁺). Thus, the lithium-rich oxide has received attention as a low-cost, high-capacity positive electrode active material.

However, the lithium-rich oxide has problems arising from structural characteristics in which two phases are mixed. Specifically, when a battery including the lithium-rich oxide is operated at a high voltage, there is a problem in that irreversible capacity loss occurs in a first formation process to reduce efficiency, and there is a problem in that O₂ gas is generated while voltage fading occurs as a layered structure changes to a rock-salt structure via a spinel structure during charge and discharge cycles.

Thus, there is a need to secure a technique that improves performance and stability of the lithium-rich oxide.

### DISCLOSURE OF THE INVENTION

### TECHNICAL PROBLEM

An aspect of the present invention is to improve performance and stability of a lithium-rich oxide and, as a result, to improve performance of a battery including the lithium-rich oxide.

Also, the present invention aims at providing a method of preparing the above positive electrode active material.

Also, the present invention aims at providing a positive electrode and a lithium secondary battery which include the positive electrode active material.

### TECHNICAL SOLUTION

In order to solve the above-described tasks, the present invention provides a positive electrode active material, a method of preparing a positive electrode active material, a positive electrode, and a lithium secondary battery.
(1) The present invention provides a positive electrode active material which includes a layer-structured lithium-rich transition metal oxide including both a Li₂MnO₃ phase and a LiMO₂ phase (where M is an element including at least one selected from nickel (Ni), cobalt (Co), and manganese (Mn)); and a coating layer including boron and carbon which is formed on the lithium-rich transition metal oxide, and satisfies at least one of conditions (1) to (3).
   - Condition (1): An atomic ratio (B/Mn) of boron (B) to manganese (Mn) present on a surface, which is analyzed by X-ray photoelectron spectroscopy (XPS), is in a range of 0.3 to 5.
   - Condition (2): An intensity ratio (I_{Carbonate,1}:I_{C-C}) of a peak (I_{Carbonate,1}) at 287.5 eV to 288.5 eV to a peak (I_{C-C}) at 284 eV to 285 eV in an XPS spectrum of the surface is in a range of 0.05:1 to 0.15:1.
   - Condition (3): An intensity ratio I_{Carbonate,2: IC-C}) of a peak (I_{carbonate,2}) at 288.6 eV to 290.5 eV to the peak (I_{C-C}) at 284 eV to 285 eV in the XPS spectrum of the surface is in a range of 0.05:1 to 0.15:1
(2) The present invention provides the positive electrode active material of (1) above, wherein the lithium-rich transition metal oxide is in a form of a single particle.
(3) The present invention provides the positive electrode active material of (1) above, wherein the lithium-rich transition metal oxide has an average particle diameter (D₅₀) of 0.75 µm to 10 µm.
(4) The present invention provides the positive electrode active material of any one of (1) to (3) above, wherein the lithium-rich transition metal oxide has an amount of manganese (Mn) among total metals excluding lithium of 50 mol% or more.
(5) The present invention provides the positive electrode active material of any one of (1) to (4) above, wherein the lithium-rich transition metal oxide has a composition represented by Formula 1.

   [Formula 1] Li(LiₐNi_{b}Co_{c}Mn_{d}Meₑ)O₂

   In Formula 1,
   Me is at least one selected from tungsten (W), molybdenum (Mo), zinc (Zn), magnesium (Mg), niobium (Nb), and aluminum (Al), and
   0.01≤a≤0.20, 0≤b≤0.50, 0≤c≤0.10, 0.50≤d≤1.0, 0≤e≤0.10, and a+b+c+d+e=1.
(6) The present invention provides the positive electrode active material of any one of (1) to (5) above, wherein the lithium-rich transition metal oxide is doped with W, Mo, or a combination thereof.
(7) The present invention provides the positive electrode active material of any one of (1) to (6) above, wherein the coating layer includes a compound, in which lithium, boron, and oxygen are chemically bonded to each other, and a compound including carbon.
(8) The present invention provides the positive electrode active material of any one of (1) to (7) above, wherein the coating layer has a thickness of 1 nm to 80 nm.
(9) The present invention provides a method of preparing the positive electrode active material of any one of (1) to (8) above which includes steps of: (A) dry-mixing a lithium-containing raw material and a transition metal-containing raw material and sintering the mixture to prepare a lithium-rich transition metal oxide; and (B) dry-mixing the lithium-rich transition metal oxide and a boron-containing raw material and performing a heat treatment to form a coating layer on the lithium-rich transition metal oxide.
(10) The present invention provides the method of (9) above, wherein the sintering is performed at a temperature of 850°C to 1,050°C.
(11) The present invention provides the method of (9) or (10) above, wherein the boron-containing raw material is mixed in an amount such that an amount of boron (B) is in a range of 300 ppm to 1,500 ppm based on a total weight of the lithium-rich transition metal oxide.
(12) The present invention provides the method of any one of (9) to (11) above, wherein the heat treatment is performed at a temperature of 300°C to 450°C.
(13) The present invention provides the method of any one of (9) to (12) above, wherein, when the dry-mixing of the lithium-containing raw material and the transition metal-containing raw material is performed, a doping element-containing raw material is further mixed.
(14) The present invention provides a positive electrode including the positive electrode active material of any one of (1) to (8) above.
(15) The present invention provides a lithium secondary battery including the positive electrode of (14) above.

### ADVANTAGEOUS EFFECTS

Since a positive electrode active material of the present invention includes a coating layer including boron and carbon, which is formed on a lithium-rich transition metal oxide, and satisfies at least one of conditions (1) to (3) described in this specification in relation to X-ray photoelectron spectroscopy (XPS) data, it may improve performance, for example, efficiency during a formation process, 0.33C discharge capacity, and resistance performance, of a lithium secondary battery including the positive electrode active material.

### BRIEF DESCRIPTION OF THE DRAWINGS

FIG. 1 is electron energy loss spectroscopy (EELS) data of a positive electrode active material of Example 1 of the present invention.
FIG. 2 is X-ray diffraction (XRD) spectra for positive electrode active materials of Examples 1 to 4 of the present invention.
FIG. 3 is X-ray photoelectron spectroscopy (XPS) spectra of Examples 1 to 3 and Comparative Example 1 of the present invention.

### BEST MODE FOR CARRYING OUT THE INVENTION

Hereinafter, the present invention will be described in more detail to allow for a clearer understanding of the present invention.

It will be understood that words or terms used in the description and claims of the present invention shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present specification, 'a form of a single particle' is a concept in contrast to a form of a spherical secondary particle which is formed by aggregation of tens to hundreds of primary particles, wherein it means a form composed of 10 or less primary particles. Specifically, 'the form of a single particle' may be in the form of a single particle composed of one primary particle, or may be in the form of a secondary particle in which several primary particles are aggregated.

In this specification, a 'primary particle' denotes the smallest unit of particles recognized when a positive electrode active material is observed by using a scanning electron microscope (SEM), and a 'secondary particle' denotes a secondary structure formed by aggregation of a plurality of the primary particles.

In this specification, the expression 'average particle diameter (D₅₀)' denotes a particle diameter at 50% of cumulative distribution of volume according to the particle diameter. After dispersing measurement target powder in a dispersion medium, the dispersion medium is introduced into a commercial laser diffraction particle size measurement instrument (e.g., Bluewave by Microtrac), a particle size distribution is calculated by measuring a difference in diffraction patterns due to a particle size when particles pass through a laser beam, and the D₅₀ may be measured by calculating a particle diameter at 50% of the cumulative distribution of volume according to the particle diameter using the measurement instrument.

### Positive Electrode Active Material

The present invention provides a positive electrode active material which includes a layer-structured lithium-rich transition metal oxide including both a Li₂MnO₃ phase and a LiMO₂ phase (where M is an element including at least one selected from nickel (Ni), cobalt (Co), and manganese (Mn), and specifically, M = NiₓCo_{y}Mn_{z}, 0≤x≤0.9, 0≤y≤0.1, 0.1≤z≤1.0, and x+y+z=1); and a coating layer including boron and carbon which is formed on the lithium-rich transition metal oxide, and satisfies at least one of conditions (1) to (3) below.
- Condition (1): An atomic ratio (B/Mn) of boron (B) to manganese (Mn) present on a surface, which is analyzed by X-ray photoelectron spectroscopy (XPS), is in a range of 0.3 to 5.
- Condition (2): An intensity ratio (I_{Carbonate,1}:I_{C-C}) of a peak (I_{Carbonate,1}) at 287.5 eV to 288.5 eV to a peak (I_{C-C}) at 284 eV to 285 eV in an XPS spectrum of the surface is in a range of 0.05:1 to 0.15:1.
- Condition (3): An intensity ratio (I_{Carbonate,2:IC-C}) of a peak (I_{carbonate,2}) at 288.6 eV to 290.5 eV to the peak (I_{C-C}) at 284 eV to 285 eV in the XPS spectrum of the surface is in a range of 0.05:1 to 0.15:1.

The inventors of the present invention found that, in a case in which a positive electrode active material includes a coating layer including boron and carbon, which is formed on a lithium-rich transition metal oxide, and satisfies at least one of conditions (1) to (3) when a surface of the positive electrode active material is analyzed by XPS, discharge capacity and efficiency may be improved in a first formation process of a battery including the above positive electrode active material, 0.33 C discharge capacity may be improved, and resistance characteristics may also be improved, thereby leading to the completion of the present invention.

XPS is a device which analyzes components or a chemical bonding state from a surface to a depth of 10 nm, wherein, in this specification, the surface analyzed by the XPS may be a region from an outermost surface of the positive electrode active material to a depth of 10 nm.

In a case in which the positive electrode active material does not include the coating layer, since there are problems that arise due to structural characteristics of the two phases being mixed, initial formation efficiency and 0.33 C discharge capacity of a battery including the positive electrode active material are reduced, and, in a case in which the coating layer does not include carbon, there is a problem in that resistance of the positive electrode active material is high due to low conductivity of the coating layer. In addition, the positive electrode active material is a Mn-rich positive electrode active material, wherein, when the surface of the positive electrode active material is analyzed by XPS, since an amount of manganese present on the surface is higher than that of a NCM-based positive electrode active material, an atomic ratio (B/Mn) of boron (B) to manganese (Mn) present on the surface is relatively small. The atomic ratio (B/Mn) of the boron (B) to the manganese (Mn) present on the surface may specifically be 0.30 or more, 0.40 or more, 4.50 or less, or 5.00 or less.

According to the present invention, the positive electrode active material may have lower resistance than the lithium-rich transition metal oxide. That is, the coating layer included in the positive electrode active material may improve electronic conductivity and ionic conductivity of the positive electrode active material by including a material having low resistance.

According to the present invention, the positive electrode active material may have an intensity ratio (I_{Carbonate,1}:I_{C-C}) of a peak (I_{Carbonate,1}) at 287.5 eV to 288.5 eV to a peak (I_{C-C}) at 284 eV to 285 eV in an XPS spectrum of the surface of 0.05:1 to 0.15:1. Also, the positive electrode active material may have an intensity ratio (I_{Carbonate,2}:I_{C-C}) of a peak (I_{carbonate,2}) at 288.6 eV to 290.5 eV to the peak (I_{C-C}) at 284 eV to 285 eV in the XPS spectrum of the surface of 0.05:1 to 0.15:1. The reason for this is that, with respect to the positive electrode active material according to the present invention, since an amount of Li₂CO₃ among by-products (residual lithium) present in the lithium-rich transition metal oxide is significantly decreased as the coating layer is formed on the lithium-rich transition metal oxide, an amount of carbonate present on the surface of the positive electrode active material is significantly decreased. In a case in which I_{Carbonate,1}:I_{C-C} and/or I_{Carbonate,2}:I_{C-C} in the XPS spectrum of the surface of the positive electrode active material satisfies the above-described ranges, charge and discharge efficiency, 0.33 C discharge capacity, and resistance characteristics of a battery including the positive electrode active material according to the present invention may be further improved.

The intensity ratio (I_{Carbonate,1}:I_{C-C}) of the peak (I_{Carbonate,1}) at 287.5 eV to 288.5 eV to the peak (I_{C-C}) at 284 eV to 285 eV may specifically be in a range of 0.05:1 to 0.15:1, 0.06:1 to 0.15:1, 0.07:1 to 0.14:1, 0.08:1 to 0.13:1, or 0.09:1 to 0.12:1. In addition, the intensity ratio (I_{Carbonate,2}:I_{C-C}) of the peak (I_{carbonate,2}) at 288.6 eV to 290.5 eV to the peak (I_{C-C}) at 284 eV to 285 eV may specifically be in a range of 0.05:1 to 0.15:1, 0.06:1 to 0.14:1, 0.07:1 to 0.13:1, or 0.08:1 to 0.12:1.

According to the present invention, the lithium-rich transition metal oxide may be in a form of a single particle in terms of reducing gas generation and improving energy density of a lithium secondary battery.

According to the present invention, the lithium-rich transition metal oxide may have an average particle diameter (D₅₀) of 0.75 µm to 10 µm, specifically, 0.9 µm to 10 µm. In this case, electrode defects due to particle aggregation during preparation of an electrode may be prevented.

In a case in which the lithium-rich transition metal oxide is in the form of a single particle, the average particle diameter (D₅₀) of the lithium-rich transition metal oxide may be in a range of 0.75 µm to 2 µm.

In addition, in a case in which the lithium-rich transition metal oxide is in a form of a secondary particle which is formed by aggregation of tens to hundreds of primary particles, the average particle diameter (D₅₀) of the lithium-rich transition metal oxide may be in a range of 3 µm to 10 µm.

According to the present invention, the lithium-rich transition metal oxide may have an amount of manganese (Mn) among total metals excluding lithium of 50 mol% or more, particularly 60 mol% or more, and more particularly 65 mol% or more. In this case, high capacity may be achieved even during charging at high voltage.

According to the present invention, the lithium-rich transition metal oxide may have a composition represented by Formula 1 below. In this case, the charge and discharge efficiency in the first formation process and the discharge capacity (particularly, the discharge capacity at 0.33 C) after the formation process of the battery including the positive electrode active material according to the present invention may be improved.

[Formula 1] Li(LiₐNi_{b}Co_{c}Mn_{d}Meₑ)O₂

In Formula 1,
Me is at least one selected from tungsten (W), molybdenum (Mo), zinc (Zn), magnesium (Mg), niobium (Nb), and aluminum (Al), and
0.01≤a≤0.20, 0≤b≤0.50, 0≤c≤0.10, 0.50≤d≤1.0, 0≤e≤0.10, and a+b+c+d+e=1.

The lithium-rich transition metal oxide may not contain expensive cobalt, and may improve performance of the lithium secondary battery without containing the cobalt.

According to the present invention, the lithium-rich transition metal oxide may be doped with W, Mo, or a combination thereof. In a case in which the lithium-rich transition metal oxide is doped with the tungsten (W), the performance of the battery may be improved, and, in a case in which the lithium-rich transition metal oxide is doped with the molybdenum (Mo), a particle size of the positive electrode active material may not only be increased, but a particle shape may also be improved. The lithium-rich transition metal oxide may be doped with the tungsten (W) in an amount of 14,700 ppm or less, and the lithium-rich transition metal oxide may also be doped with the molybdenum (Mo) in an amount of 5,500 ppm or less.

The amount of the tungsten (W) may be 6,300 ppm or more, 7,500 ppm or more, 8,500 ppm or more, or 9,000 ppm or more, and may be 10,500 ppm or less, 12,000 ppm or less, 13,000 ppm or less, 14,000 ppm or less, or 14,700 ppm or less based on a total amount of the lithium-rich transition metal oxide. In a case in which the amount of the tungsten (W) is within the above range, since a W ion forms a W-O bond, structural stability may be improved. Specifically, if all lithium of a transition metal layer in the Li₂MnO₃ phase is deintercalated during first charge, oxygen is released to balance a chemical equivalence, wherein, in this case, an amount of the oxygen released from the surface is decreased due to the W-O bond. Also, since a cation mixing phenomenon is suppressed during charge and discharge processes due to the W-O bond to prevent deformation of the layered structure, capacity characteristics and resistance characteristics of the secondary battery including the positive electrode active material may be improved.

The amount of the molybdenum (Mo) may be 1,100 ppm or more, 1,500 ppm or more, 2,000 ppm or more, or 2,500 ppm or more, and may be 3,300 ppm or less, 3,500 ppm or less, 4,000 ppm or less, 4,500 ppm or less, or 5,500 ppm or less based on the total amount of the lithium-rich transition metal oxide. In a case in which the amount of the molybdenum (Mo) is within the above range, since a Mo ion has a relatively large cationic radius, the particle size of the positive electrode active material may be increased and the particle shape may be improved, and thus, life characteristics of the secondary battery including the positive electrode active material may be improved.

According to the present invention, the coating layer may include a compound, in which lithium, boron, and oxygen are chemically bonded to each other, and a compound including carbon. That is, an amorphous compound containing lithium, boron, and oxygen and a carbon-based compound may coexist.

According to the present invention, the coating layer may have a thickness of 1 nm to 80 nm, particularly 1 nm to 50 nm, and more particularly 2 nm to 20 nm. In this case, the coating layer may contribute to improve electrical properties, particularly to reduce resistance.

### Method of Preparing Positive Electrode Active Material

The present invention provides a method of preparing the above-described positive electrode active material according to the present invention which includes the steps of: (A) dry-mixing a lithium-containing raw material and a transition metal-containing raw material and sintering the mixture to prepare a lithium-rich transition metal oxide; and (B) dry-mixing the lithium-rich transition metal oxide and a boron-containing raw material and performing a heat treatment to form a coating layer on the lithium-rich transition metal oxide.

### Step (A)

Step (A) is a step of dry-mixing a lithium-containing raw material and a transition metal-containing raw material and then sintering the mixture to prepare a layer-structured lithium-rich transition metal oxide including both a Li₂MnO₃ phase and a LiMO₂ phase (M = NiₓCo_{y}Mn_{z}, 0≤x≤0.9, 0≤y≤0.1, 0.1≤z≤1.0, and x+y+z=1).

According to the present invention, when the dry-mixing of the lithium-containing raw material and the transition metal-containing raw material is performed in step (A), a doping element-containing raw material may be further mixed. That is, the doping element-containing raw material may be optionally added.

The lithium-containing raw material may be a lithium-containing raw material that may be used during preparation of a positive electrode active material, for example, lithium hydroxide, lithium carbonate, or lithium oxide.

The transition metal-containing raw material may include a nickel compound, a cobalt compound, or a manganese compound.

The nickel compound is a nickel raw material that may be used during the preparation of the positive electrode active material, wherein, for example, it may be carbonate, sulfate, nitrate, hydroxide, and oxide of nickel.

The cobalt compound is a cobalt raw material that may be used during the preparation of the positive electrode active material, wherein, for example, it may be carbonate, sulfate, nitrate, hydroxide, and oxide of cobalt.

The manganese compound is a manganese raw material that may be used during the preparation of the positive electrode active material, wherein, for example, it may be carbonate, sulfate, nitrate, or oxide of manganese.

The doping element-containing raw material includes at least one selected from W and Mo, wherein it may be tungsten oxide, molybdenum oxide, ammonium molybdate, or lithium molybdate.

For example, a tungsten (W) -containing raw material may be at least one selected from the group consisting of WO₃ WC, WS₂, and C₈H₁₆O₈W, and any one thereof or a mixture of two or more thereof may be used. Specifically, WO₃ may be used in consideration of economic efficiency, an amount of gas generated during the heat treatment, and heat treatment temperature.

In addition, a molybdenum (Mo)-containing raw material may be at least one selected from the group consisting of Li₂MoO₄, MoO₃, and (NH₄)₆Mo₇O₂₄, and any one thereof or a mixture of two or more thereof may be used. Specifically, Li₂MoO₄ may be used in consideration of raw materials used during the mixing, an amount of Mo, and the heat treatment temperature.

The lithium-containing raw material, the transition metal-containing raw material, and the doping element-containing raw material may be added in amounts such that the resulting lithium-rich transition metal oxide has the composition represented by Formula 1.

According to the present invention, the sintering in step (A) may be performed at a temperature of 850°C to 1,050°C. In this case, crystallinity of the positive electrode active material may be increased.

The sintering may be performed for 1 hour to 15 hours.

Specifically, in step (A), the lithium-containing raw material and the transition metal-containing raw material may be dry-mixed, and then primarily sintered (corresponding to the above sintering) to prepare a primary sintered product, and, after the primary sintered product is primarily ground, a secondary sintered product is prepared by performing secondary sintering in order to remove fine particles generated by the grinding, and a lithium-rich transition metal oxide may be prepared by secondary grinding of the secondary sintered product. In this case, the secondary sintering does not affect the phase of the lithium-rich transition metal oxide, and is a heat treatment process for aggregating fine particles with a very small particle size by heat energy, wherein it may be performed at a temperature (700°C to 800°C) lower than the primary sintering temperature.

Since the primary sintered product includes a multi-particle in which several (a few to a few tens of) particles are randomly aggregated, the primary grinding is performed to reduce a size distribution among the multi-particles. The primary grinding is a process of grinding the particles with a weak force, wherein it has an aspect similar to a disintegration process.

The secondary grinding is a process of grinding particles with a strong force such that multi-particles included in the secondary sintered product may exist in a form of a single particle by separating the multi-particles one by one, wherein the particle has the form of a single particle after the secondary grinding, and the average particle diameter of the lithium-rich transition metal oxide in this specification may be an average particle diameter of the lithium-rich transition metal oxide in the form of a single particle after completion of the secondary grinding.

### Step (B)

Step (B) is a step of dry-mixing the lithium-rich transition metal oxide and a boron-containing raw material and performing a heat treatment to form a coating layer on the lithium-rich transition metal oxide.

A by-product, such as residual lithium, is present on a surface of the lithium-rich transition metal oxide prepared in step (A), wherein even though a step of washing the residual lithium is not included in the present invention, since an amount of the residual lithium is reduced through step (B), particularly, a Li₂CO₃ content is significantly reduced, performance of the resulting positive electrode active material may be excellent.

Specifically, if the lithium-rich transition metal oxide is dry-mixed with the boron-containing raw material and then heat-treated, since the boron-containing raw material melts and Li₂CO₃ among the by-products (residual lithium) present in the lithium-rich transition metal oxide also participates in a reaction, a coating layer including boron and carbon is formed. That is, the boron present in the coating layer may be derived from the boron-containing raw material, and the carbon may be derived from the Li₂CO₃ among the by-products (residual lithium) present in the lithium-rich transition metal oxide. Accordingly, the positive electrode active material according to the present invention may have a significantly low amount of the carbonate present on the surface thereof. In addition to the boron and carbon, the coating layer may further include lithium and oxygen, and the coating layer may include a compound, in which lithium, boron, and oxygen are chemically bonded to each other, and a compound including carbon.

According to the present invention, in step (B), the boron-containing raw material may be mixed in an amount such that an amount of boron (B) is in a range of 300 ppm to 1,500 ppm based on a total weight of the lithium-rich transition metal oxide. Specifically, the boron-containing raw material may be mixed in an amount such that the amount of the boron (B) is 300 ppm or more, 500 ppm or more, 1,000 ppm or more, or 1,500 ppm or less based on the total weight of the lithium-rich transition metal oxide. In this case, since a coating layer including boron and carbon of an appropriate thickness is formed, electrical characteristics of the prepared positive electrode active material may be improved.

According to the present invention, the heat treatment in step (B) may be performed at a temperature of 300°C to 450°C. The heat treatment temperature may specifically be 300°C or higher, 310°C or higher, 320°C or higher, 330°C or higher, 340°C or higher, 360°C or less, 380°C or less, 400°C or less, or 450°C or less. In this case, a coating layer, which improves battery performance while having high electrical conductivity, may be formed.

The heat treatment may be performed for 3 hours to 7 hours, specifically, 3 hours to 5 hours.

### Positive Electrode

The present invention provides a positive electrode including the positive electrode active material.

The positive electrode may include a positive electrode collector and a positive electrode active material layer formed on the positive electrode collector, wherein the positive electrode active material layer may include the above positive electrode active material.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode active material, if necessary. In this case, the positive electrode active material may be included in an amount of 80 wt% to 99 wt%, more specifically, 85 wt% to 98.5 wt% based on a total weight of the positive electrode active material layer, and excellent capacity characteristics may be obtained within this range.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves adhesion between positive electrode active material particles and adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder, the conductive agent, and a dispersant in a solvent, is applied to the positive electrode collector, and the positive electrode may then be prepared by drying and rolling the coated positive electrode collector, or the positive electrode may be prepared by casting the composition for forming a positive electrode active material layer on a separate support and then laminating a film separated from the support on the positive electrode collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have a viscosity that may provide excellent thickness uniformity during the subsequent coating for the preparation of the positive electrode.

### Lithium Secondary Battery

The present invention provides a lithium secondary battery including the positive electrode.

The lithium secondary battery may include the positive electrode; a negative electrode; a separator disposed between the positive electrode and the negative electrode, and an electrolyte. Also, the lithium secondary battery may further optionally include a battery container accommodating an electrode assembly of the positive electrode, the negative electrode, and the separator, and a sealing member sealing the battery container.

The negative electrode may include a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve adhesion of a negative electrode active material. The negative electrode collector, for example, may be used in various shapes such as that of a film, a sheet, a foil, a net, a porous body, a foam body, a non-woven fabric body, and the like.

The negative electrode active material layer may optionally include a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. The negative electrode active material may be included in an amount of 80 wt% to 99 wt% based on a total weight of the negative electrode active material layer.

The binder of the negative electrode active material layer is a component that assists in binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent of the negative electrode active material layer is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The negative electrode may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto. As a specific example, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and LiPF₆, LiClO₄ LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

Since the lithium secondary battery including the positive electrode active material according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs) and electric vehicles (EVs).

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Thus, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

### MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples

### Example 1

Li₂CO₃, NiCO₃, and MnCO₃ were dry-mixed such that a molar ratio of lithium:nickel:manganese was 1.143:0.287:0.57, and then sintered at 1,000°C for 12 hours in an air atmosphere to prepare a sintered product. The sintered product was ground with an Ultra Centrifugal Mill (UCM) (Retsch GmbH, ZM 200, 18,000 rpm), then sintered at 750°C for 5 hours in an air atmosphere to remove fine particles, and ground with a jet-mill (ISAAC ENC, Micron-master air jetmill, 3.5 bar) to prepare a lithium-rich transition metal oxide in a form of a single particle (composition: Li_{1.143}Ni_{0.287}Mn_{0.57}O₂, average particle diameter (D50): 1.05 µm).

H₃BO₃ was mixed with the lithium-rich transition metal oxide such that an amount of boron (B) was 1,200 ppm based on a total weight of the lithium-rich transition metal oxide, and then heat-treated at 350°C for 5 hours to prepare a positive electrode active material by forming a coating layer (thickness: 2 nm to 10 nm) including lithium, boron, carbon, and oxygen on the lithium-rich transition metal oxide.

### Example 2

A mixture was prepared by dry-mixing Li₂CO₃, NiCO₃, and MnCO₃ such that a molar ratio of lithium:nickel:manganese was 1.143:0.287:0.57. WO₃ was additionally mixed with the mixture such that an amount of tungsten (W) was 10,500 ppm based on a total weight of a finally-prepared lithium-rich transition metal oxide, and then sintered at 1,050°C for 12 hours to prepare a sintered product. The sintered product was ground with an UCM (Retsch GmbH, ZM 200, 18,000 rpm), then sintered at 750°C for 5 hours in an air atmosphere to remove fine particles, and ground with a jet-mill (ISAAC ENC, Micron-master air jetmill, 3.5 bar) to prepare the lithium-rich transition metal oxide in a form of a single particle (composition: Li_{1.143}Ni_{0.287}Mn_{0.565}W_{0.005}O₂, average particle diameter (D₅₀): 0.93 µm).

H₃BO₃ was mixed with the lithium-rich transition metal oxide such that an amount of boron (B) was 1,200 ppm based on the total weight of the lithium-rich transition metal oxide, and then heat-treated at 350°C for 5 hours to prepare a positive electrode active material by forming a coating layer (thickness: 2 nm to 10 nm) including lithium, boron, carbon, and oxygen on the lithium-rich transition metal oxide.

### Example 3

A mixture was prepared by dry-mixing Li₂CO₃, NiCO₃, and MnCO₃ such that a molar ratio of lithium:nickel:manganese was 1.143:0.287:0.57. WO₃ and Li₂MoO₄ were additionally mixed with the mixture such that amounts of tungsten (W) and molybdenum (Mo) were 10,500 ppm and 3,300 ppm based on a total weight of a finally-prepared lithium-rich transition metal oxide, respectively, and then sintered at 1,050°C for 12 hours to prepare a sintered product. The sintered product was ground with an UCM (Retsch GmbH, ZM 200, 18,000 rpm), then sintered at 750°C for 5 hours in an air atmosphere to remove fine particles, and ground with a jet-mill (ISAAC ENC, Micron-master air jetmill, 3.5 bar) to prepare the lithium-rich transition metal oxide in a form of a single particle (composition: Li_{1.143}Ni_{0.287}Mn_{0.562}W_{0.005}Mo_{0.003}O₂, average particle diameter (D₅₀): 1.05 µm).

H₃BO₃ was mixed with the lithium-rich transition metal oxide such that an amount of boron (B) was 1,450 ppm based on the total weight of the lithium-rich transition metal oxide, and then heat-treated at 350°C for 5 hours to prepare a positive electrode active material by forming a coating layer (thickness: 2 nm to 10 nm) including lithium, boron, carbon, and oxygen on the lithium-rich transition metal oxide.

### Example 4

Li₂CO₃, NiCO₃, and MnCO₃ were added to pure water in amounts such that a molar ratio of lithium:nickel:manganese was 1.145:0.282:0.572 (solid content: 20 wt%), and wet-mixed for 1 hour with a ball mill using zirconia balls. Thereafter, the zirconia balls were removed, and the solid content was ground using a wet grinding mill (NETZCH, MiniCer) to prepare a slurry having an average particle diameter (D₅₀) of 0.2 µm. Thereafter, the slurry was spray-dried using a spray dryer (Buchi, B-290) at an inlet hot air temperature of 200°C and an exhaust hot air temperature of 90°C or higher to obtain a dried product. The dried product was sintered at 975°C for 12 hours in an air atmosphere to prepare a sintered product. The sintered product was ground with a jet-mill (ISAAC ENC, Micron-master air jetmill, 1.7 bar) to prepare a lithium-rich transition metal oxide in a form of a single particle (composition: Li_{1.145}Ni_{0.282}Mn_{0.572}O₂, average particle diameter (D₅₀): 1.01 µm).

H₃BO₃ was mixed with the lithium-rich transition metal oxide such that an amount of boron (B) was 300 ppm based on the lithium-rich transition metal oxide, and then heat-treated at 350°C for 5 hours to prepare a positive electrode active material by forming a coating layer (thickness: 1 nm to 10 nm) including lithium, boron, carbon, and oxygen on the lithium-rich transition metal oxide.

### Comparative Example 1

The lithium-rich transition metal oxide prepared in Example 1 was used as a positive electrode active material of Comparative Example 1.

### Comparative Example 2

The lithium-rich transition metal oxide prepared in Example 2 was used as a positive electrode active material of Comparative Example 2.

### Comparative Example 3

The lithium-rich transition metal oxide prepared in Example 3 was used as a positive electrode active material of Comparative Example 3.

### Comparative Example 4

A layer-structured high-Ni-based lithium transition metal oxide (average particle diameter (D₅₀) : 10 µm) having a composition represented by LiNi_{0.88}Co_{0.05}Mn_{0.07}O₂ while being in a form of a secondary particle was prepared.

H₃BO₃ was mixed with the lithium transition metal oxide such that an amount of boron (B) was 1,000 ppm based on the lithium transition metal oxide, and then heat-treated at 350°C for 5 hours to prepare a positive electrode active material by forming a coating layer (thickness: 2 nm to 10 nm) including lithium, boron, carbon, and oxygen on the lithium-rich transition metal oxide.

### Comparative Example 5

The lithium-rich transition metal oxide prepared in Example 4 was used as a positive electrode active material of Comparative Example 5.

### Comparative Example 6

H₃BO₃ was mixed with the lithium-rich transition metal oxide prepared in Example 4 such that an amount of boron (B) was 150 ppm based on the lithium-rich transition metal oxide, and then heat-treated at 350°C for 5 hours to prepare a positive electrode active material by forming a coating layer (thickness: 1 nm to 10 nm) including lithium, boron, carbon, and oxygen on the lithium-rich transition metal oxide.

### Experimental Examples

### Experimental Example 1: EELS Analysis

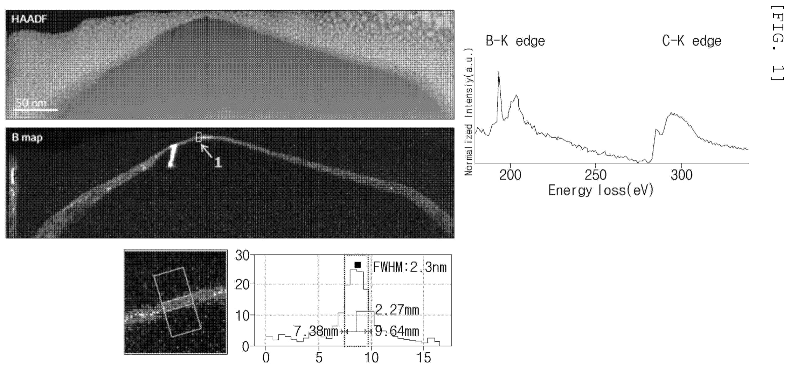

Electron energy loss spectroscopy (EELS) analysis was performed on electrodes including the positive electrode active materials prepared in Examples 1 to 4, and EELS data for Example 1 are then illustrated in FIG. 1.

Specifically, samples for cross-sectional images for STEM-EELS analysis were prepared by using TFS Helios 5 UX (accelerating voltages of 30, 5, and 2 kW, Pt coating), high-angle annular dark-field (HAADF) image and EELS image were obtained at an accelerating voltage of 200 kV using a TFS Spectra 300 scanning transmission electron microscope (STEM), and the obtained images were line-scanned to confirm the presence of constituent elements and a thickness of the coating layer.

Referring to FIG. 1, it may be confirmed that the thickness of the coating layer in an analyzed portion was about 2 nm, and it may be understood that boron and carbon were present in the coating layer.

### Experimental Example 2: XRD Analysis

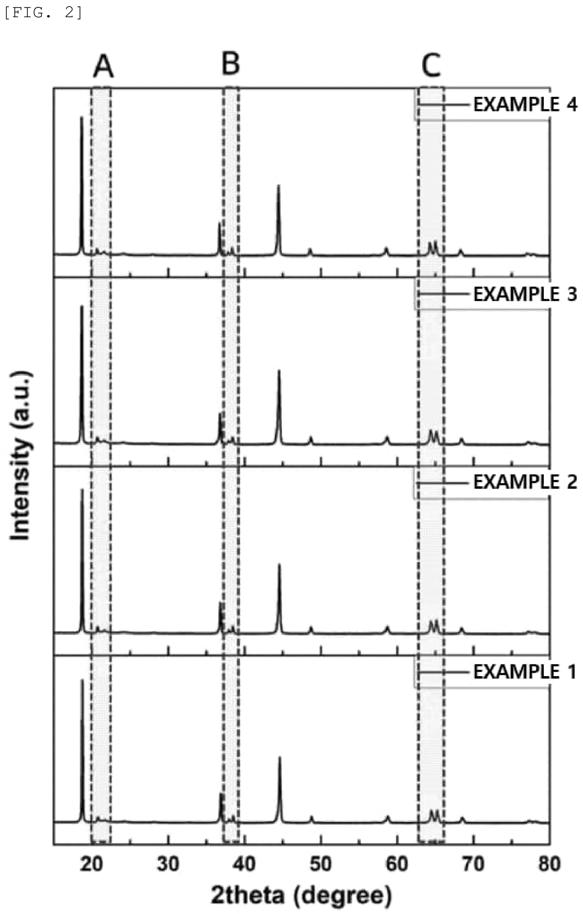

After X-ray diffraction (XRD) analysis was performed on the positive electrode active materials prepared in Examples 1 to 4, XRD spectra are illustrated in FIG. 2.

Specifically, the XRD analysis was performed using D8 endeavor by Bruker at λ = 1.5418 Å (Cu target) under conditions of 40 kV, 40 mA, and 2 theta: 15 to 80 degrees.

Referring to FIG. 2, since all of the positive electrode active materials prepared in Examples 1 to 4 had peaks corresponding to A, B, and C regions shaded in FIG. 2, it may be confirmed that the positive electrode active materials included both a Li₂MnO₃ phase and a LiMO₂ phase, and a layer-structured lithium-rich oxide was formed.

### Experimental Example 3: XPS Analysis

### - Analysis of Element Content on Surface of the Positive Electrode Active Material

After X-ray photoelectron spectroscopy (XPS) analysis was performed on the positive electrode active materials prepared in Examples 1 to 4 and Comparative Examples 4 and 6, amounts of O, C, Li, Mn, Ni, and B among elements present on surfaces were analyzed and presented in Table 1 below. Also, an atomic ratio (B/Mn) of boron (B) to manganese (Mn) was calculated and presented in Table 1 below.

Specifically, Nexsa by Thermo Fisher Scientific Inc. was used, monochromatic Al Ka (1486.6 eV) was used as an X-ray source, a CAE (Constant Analyzer Energy) mode was used as an operation mode, and an Avantage software (version 5.9925) was used. After filling a sample into a powder holder, the powder holder was fixed on a copper (Cu) foil with a carbon tape and loaded into the instrument. When a vacuum in a load lock was sufficiently low after loading the sample, an experiment was performed according to a K-Alpha standard operating procedure (SOP-0524-0k). Qualitative analysis was performed after performing a survey scan on a surface of each sample (as-received state), and a narrow scan (snap) for each element was obtained at three points per sample according to qualitative analysis results to perform quantitative analysis.

**[Table 1]**

| Category | O(atomic %) | C(atomic %) | Li (atomi c%) | Mn (atomi c%) | Ni (atomi c%) | B (atomic %) | B/Mn |
|---|---|---|---|---|---|---|---|
| Example 1 | 45.6 | 12.1 | 19.9 | 5.8 | 4.8 | 10.7 | 1.84 |
| Example 2 | 46.6 | 11.6 | 19.5 | 5.6 | 5.4 | 9.5 | 1.70 |
| Example 3 | 47.3 | 10.1 | 18.7 | 3.4 | 3.2 | 15 | 4.41 |
| Example 4 | 49.40 | 10.61 | 20.58 | 7.01 | 9.53 | 2.87 | 0.41 |
| Comparative Example 4 | 46.8 | 17.2 | 20.3 | 0.2 | 6.2 | 8.9 | 44.50 |
| Comparative Example 6 | 48.32 | 11.87 | 21.58 | 7.00 | 9.47 | 1.75 | 0.25 |

Referring to Table 1, since the positive electrode active materials of Examples 1 to 4 had a larger amount of manganese on their surfaces than the NCM-based positive electrode active material of Comparative Example 4, it may be confirmed that B/Mn values were relatively much lower. Also, with respect to the positive electrode active materials of Examples 1 to 4, the B/Mn values satisfied a range of 0.3 to 5, but it may be confirmed that the positive electrode active material of Comparative Example 6 had a B/Mn value of less than 0.3.

### - Analysis of Carbonate Content on the Surface of the Positive Electrode Active Material

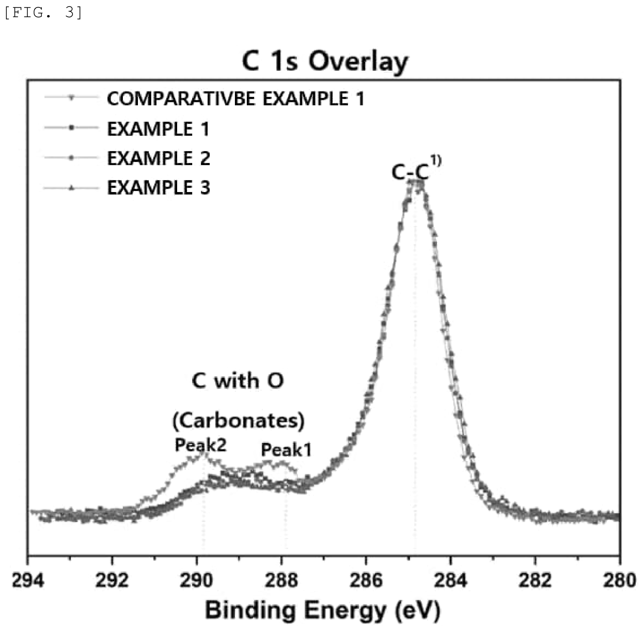

XPS analysis was performed on the positive electrode active materials prepared in Examples 1 to 3 and Comparative Example 1 using the same method as in the analysis of the element content on the surface of the positive electrode active material and XPS spectra obtained are illustrated in FIG. 3. In addition, an intensity ratio (I_{Carbonate,1}:I_{C-C}) of a peak (I_{Carbonate,1}) at 287.5 eV to 288.5 eV to a peak (I_{C-C}) at 284 eV to 285 eV and an intensity ratio (I_{Carbonate,2}:I_{C-C}) of a peak (I_{carbonate,2}) at 288.6 eV to 290.5 eV to the peak (I_{C-C}) at 284 eV to 285 eV in the XPS spectrum of the surface were calculated and presented in Table 2 below.

**[Table 2]**

| Category | I_{Carbonate, 1}:I_{C-C} | I_{Carbonate, 2} : I_{C-C} |
|---|---|---|
| Example 1 | 0.118 | 0.115 |
| Example 2 | 0.099 | 0.091 |
| Example 3 | 0.106 | 0.089 |
| Comparative Example 1 | 0.177 | 0.205 |

Referring to FIG. 3 and Table 2, with respect to the positive electrode active materials of Examples 1 to 3, since an intensity of the carbonate peak was significantly lower than that of the positive electrode active material of Comparative Example 1, it may be understood that a carbonate content was significantly reduced.

### Experimental Example 4: Residual Lithium Content Analysis

A residual lithium content was analyzed for the positive electrode active materials prepared in Examples 1 to 4 and Comparative Examples 1 to 6 by the following method, and the results thereof are presented in Table 3 below. Additionally, a residual lithium content was analyzed in the same manner as in Experimental Example 4 by using the lithium transition metal oxide of Comparative Example 4 as a positive electrode active material, and the results thereof are presented as Reference Example 1 in Table 3 below.

Specifically, when analyzing the residual lithium content, 888 Titrandeo, 814 USM Sample Processor, and tiamo 2.5 software by Metrohm AG were used. 2.5 g of the positive electrode active material was added to 100 ml of ultrapure water and then stirred at 300 rpm for 5 minutes in a stirrer. A solution after completion of the stirring was vacuum-filtered using a PES04547A filter, and a residual lithium content of the filtered liquid was analyzed using 0.1 N HCl.

**[Table 3]**

| Category | Residual lithium (wt%) | | |
|---|---|---|---|
| | Li₂CO₃ | LiOH | Total |
| Example 1 | 0.141 | 0.305 | 0.446 |
| Example 2 | 0.178 | 0.302 | 0.480 |
| Example 3 | 0.128 | 0.141 | 0.268 |
| Example 4 | 0.148 | 0.098 | 0.246 |
| Comparative Example 1 | 0.379 | 0.115 | 0.494 |
| Comparative Example 2 | 0.381 | 0.110 | 0.491 |
| Comparative Example 3 | 0.243 | 0.127 | 0.370 |
| Comparative Example 4 | 0.145 | 0.277 | 0.422 |
| Reference Example 1 | 0.165 | 0.163 | 0.328 |
| Comparative Example 5 | 0.226 | 0.051 | 0.276 |
| Comparative Example 6 | 0.174 | 0.083 | 0.257 |

Referring to Table 3, with respect to the positive electrode active material of Example 1, the positive electrode active material of Example 2, the positive electrode active material of Example 3, and the positive electrode active material of Example 4, it may be confirmed that total amounts of residual lithium were decreased in comparison to that of the positive electrode active material of Comparative Example 1, that of the positive electrode active material of Comparative Example 2, that of the positive electrode active material of Comparative Example 3, and those of the positive electrode active materials of Comparative Examples 5 and 6, respectively, and particularly, it may be confirmed that an amount of Li₂CO₃ in the residual lithium was significantly decreased. Additionally, with respect to the positive electrode active materials of Examples 1 to 4, it may be confirmed that a decrease rate of the amount of the Li₂CO₃ was significantly higher than that of the NCM-based positive electrode active material including the coating layer containing boron.

### Experimental Example 5: Battery Characteristics Evaluation

92.5 wt% of each of the positive electrode active materials prepared in Examples 1 to 4 and Comparative Examples 1 to 6, 3 wt% of Super P as a conductive agent, and 4.5 wt% of polyvinylidene fluoride (PVDF), as a binder, were mixed in a N-methylpyrrolidone (NMP) solvent to prepare a positive electrode slurry. One surface of an aluminum current collector was coated with the above-prepared positive electrode slurry, dried at 130°C, and then rolled to prepare each positive electrode.

A lithium metal electrode was used as a negative electrode, and an electrode assembly was prepared by disposing a porous polyethylene separator between the positive electrode and the negative electrode. A coin-type half-cell was prepared by disposing the electrode assembly in a battery case, and then injecting an electrolyte solution (additives: LiBF₄ 2%, FEC 5%) in which 1 M LiPF₆ was dissolved in an organic solvent in which ethylene carbonate (EC) :ethyl methyl carbonate (EMC) were mixed in a volume ratio of 3:7.

The above-prepared coin-type half-cell including each of the positive electrode active materials of Examples 1 to 4 and Comparative Examples 1 to 3, 5, and 6 was charged at a constant current of 0.1 C to 4.65 V at 45°C, and then discharged at a constant current of 0.1 C to 2.0 V to perform a formation process, charge and discharge capacities in this case are presented in Table 4 below, and a percentage of the discharge capacity to the charge capacity in this case was defined as an efficiency of the formation process and presented in Table 4 below.

The battery subjected to the formation process was charged at a constant current of 0.1 C to 4.4 V at 25°C, and then discharged at a constant current of 0.1 C to 2.5 V to check initial charge and discharge performance, a charge and discharge process was performed by changing the current from 0.1 C to 0.33 C, this cycle was set as 1 cycle, discharge capacity was measured while repeating a total of 30 cycles of charging and discharging, the discharge capacity in a 1^{st} cycle is presented in Table 4 below, and a percentage of the discharge capacity in a 30^{th} cycle to the discharge capacity in the 1^{st} cycle was defined as capacity retention and presented in Table 4 below.

An initial voltage and a voltage at 60 seconds were measured while the battery subjected to the formation process was charged at a constant current of 0.1 C to 4.4 V at 25°C and discharged at a constant current of 0.1 C to 2.5 V, and direct current internal resistance (DCIR) was calculated and presented in Table 4 below. For reference, a DCIR value is a value calculated by dividing a difference between the voltage at 60 seconds while discharging the battery at a constant current of 0.1 C and the initial voltage by an applied current.

With respect to the above-prepared coin-type half-cell including the positive electrode active material of Comparative Example 4, since a type of positive electrode material was different, battery evaluation conditions were different. Specifically, an initial voltage and a voltage at 60 seconds were measured while the battery, which was not subjected to the formation process, was charged at a constant current of 0.1 C to 4.25 V at 25°C and discharged at a constant current of 0.1 C to 2.5 V, and direct current internal resistance (DCIR) was calculated and presented in Table 4 below.

For reference, a battery was prepared in the same manner as in Experimental Example 5 by using the lithium transition metal oxide of Comparative Example 4 as a positive electrode active material, and a DCIR value, which was obtained in the same manner as the battery evaluation method of Comparative Example 4, was 18.6 Ω.

**[Table 4]**

| Category | Formation process | | | Discharge capacity in the 1^{st} cycle (mAh/g) | Capacity retention (%) | DCIR (Ω) |
|---|---|---|---|---|---|---|
| | Charge capacity (mAh/g) | Discharge capacity (mAh/g) | Efficiency (%) | | | |
| Example 1 | 309.20 | 266.03 | 86.04 | 180.4 | 97.73 | 28.6 |
| Example 2 | 299.4 | 270.0 | 90.19 | 187.1 | 96.12 | 23.8 |
| Example 3 | 305.9 | 265.2 | 86.70 | 176.2 | - | 30.3 |
| Example 4 | 316.1 | 285.4 | 90.30 | 197.30 | - | 30.77 |
| Comparative Example 1 | 317.41 | 267.39 | 84.24 | 179.1 | 97.15 | 43.7 |
| Comparative Example 2 | 301.4 | 268.3 | 89.01 | 183.1 | 96.30 | 29.5 |
| Comparative Example 3 | 304.8 | 262.4 | 86.09 | 175.3 | 97.38 | 32.2 |
| Comparative Example 4 | - | - | - | - | - | 27.01 |
| Comparative Example 5 | 315.9 | 284.3 | 90.0 | 196.03 | - | 37.82 |
| Comparative Example 6 | 314.8 | 283.6 | 90.1 | 194.24 | - | 31.84 |

Referring to Table 4, it may be confirmed that the battery including the positive electrode active material of Example 1 had better efficiency during the formation process, better discharge capacity (0.33 C discharge capacity) in the 1^{st} cycle, and significantly lower direct current internal resistance than the battery including the positive electrode active material of Comparative Example 1. Also, it may be confirmed that the battery including the positive electrode active material of Example 2 had better efficiency during the formation process, better discharge capacity (0.33 C discharge capacity) in the 1^{st} cycle, and significantly lower direct current internal resistance than the battery including the positive electrode active material of Comparative Example 2. Furthermore, it may be confirmed that the battery including the positive electrode active material of Example 3 had better efficiency during the formation process, better discharge capacity (0.33 C discharge capacity) in the 1^{st} cycle, and significantly lower direct current internal resistance than the battery including the positive electrode active material of Comparative Example 3. Also, it may be confirmed that the battery including the positive electrode active material of Example 4 had better efficiency during the formation process, better discharge capacity (0.33 C discharge capacity) in the 1^{st} cycle, and significantly lower direct current internal resistance than the battery including the positive electrode active material of Comparative Example 5.

Accordingly, it may be confirmed that the positive electrode active material according to the present invention had lower resistance than the lithium-rich transition metal oxide without a coating layer. Also, in a case in which the atomic ratio (B/Mn) of boron (B) to manganese (Mn) present on the surface, which was analyzed by XPS, satisfied a range of 0.3 to 5, it may be confirmed that overall performance of the battery was improved.

With respect to the battery including the positive electrode active material of Comparative Example 4 in which the coating layer formed on the high-Ni-based lithium transition metal oxide was included, it may be confirmed that direct current internal resistance was higher than that of the battery including the high-Ni-based lithium transition metal oxide.

The reason for this is that the coating layer included in the positive electrode active material of the present invention included a material having low resistance, but the coating layer included in the positive electrode active material of Comparative Example 4 included a material having high resistance.

As a result, since the positive electrode active material of the present invention included the coating layer including boron and carbon, which was formed on the layer-structured lithium-rich transition metal oxide including both the Li₂MnO₃ phase and the LiMO₂ phase, and satisfied at least one of conditions (1) to (3) below, it may be understood that the positive electrode active material of the present invention may improve performance of the lithium secondary battery including the same.
- Condition (1): The atomic ratio (B/Mn) of boron (B) to manganese (Mn) present on the surface, which is analyzed by XPS, is in a range of 0.3 to 5.
- Condition (2): The intensity ratio (I_{Carbonate,1}:I_{C-C}) of the peak (I_{Carbonate,1}) at 287.5 eV to 288.5 eV to the peak (I_{C-C}) at 284 eV to 285 eV in the XPS spectrum of the surface is in a range of 0.05:1 to 0.15:1.
- Condition (3): The intensity ratio (I_{Carbonate,2}:I_{C-C}) of the peak (I_{carbonate,2}) at 288.6 eV to 290.5 eV to the peak (I_{C-C}) at 284 eV to 285 eV in the XPS spectrum of the surface is in a range of 0.05:1 to 0.15:1.

## Claims

1. A positive electrode active material which comprises
a layer-structured lithium-rich transition metal oxide including both a Li₂MnO₃ phase and a LiMO₂ phase (where M is an element including at least one selected from nickel (Ni), cobalt (Co), and manganese (Mn)); and
a coating layer including boron and carbon which is formed on the lithium-rich transition metal oxide, and
satisfies at least one of conditions (1) to (3):
- Condition (1): An atomic ratio (B/Mn) of boron (B) to manganese (Mn) present on a surface, which is analyzed by X-ray photoelectron spectroscopy (XPS), is in a range of 0.3 to 5
- Condition (2): An intensity ratio (I_{Carbonate,1}:I_{C-C}) of a peak (I_{Carbonate,1}) at 287.5 eV to 288.5 eV to a peak (I_{C-C}) at 284 eV to 285 eV in an XPS spectrum of the surface is in a range of 0.05:1 to 0.15:1
- Condition (3): An intensity ratio (I_{Carbonate,2}:I_{C-C}) of a peak (I_{carbonate,2}) at 288.6 eV to 290.5 eV to the peak (I_{C-C}) at 284 eV to 285 eV in the XPS spectrum of the surface is in a range of 0.05:1 to 0.15:1.

2. The positive electrode active material of claim 1, wherein the lithium-rich transition metal oxide is in a form of a single particle.

3. The positive electrode active material of claim 1, wherein the lithium-rich transition metal oxide has an average particle diameter (D₅₀) of 0.75 µm to 10 µm.

4. The positive electrode active material of claim 1, wherein the lithium-rich transition metal oxide has an amount of manganese (Mn) among total metals excluding lithium of 50 mol% or more.

5. The positive electrode active material of claim 1, wherein the lithium-rich transition metal oxide has a composition represented by Formula 1:
[Formula 1] Li(LiₐNi_{b}Co_{c}Mn_{d}Meₑ)O₂
wherein, in Formula 1,
Me is at least one selected from tungsten (W), molybdenum (Mo), zinc (Zn), magnesium (Mg), niobium (Nb), and aluminum (Al), and
0.01≤a≤0.20, 0≤b≤0.50, 0≤c≤0.10, 0.50≤d≤1.0, 0≤e≤0.10, and a+b+c+d+e=1.

6. The positive electrode active material of claim 1, wherein the lithium-rich transition metal oxide is doped with W, Mo, or a combination thereof.

7. The positive electrode active material of claim 1, wherein the coating layer comprises a compound, in which lithium, boron, and oxygen are chemically bonded to each other, and a compound including carbon.

8. The positive electrode active material of claim 1, wherein the coating layer has a thickness of 1 nm to 80 nm.

9. A method of preparing the positive electrode active material of claim 1, the method comprising steps of:
(A) dry-mixing a lithium-containing raw material and a transition metal-containing raw material and sintering the mixture to prepare a lithium-rich transition metal oxide; and
(B) dry-mixing the lithium-rich transition metal oxide and a boron-containing raw material and performing a heat treatment to form a coating layer on the lithium-rich transition metal oxide.

10. The method of claim 9, wherein the sintering is performed at a temperature of 850°C to 1,050°C.

11. The method of claim 9, wherein the boron-containing raw material is mixed in an amount such that an amount of boron (B) contained in the boron-containing raw material is in a range of 300 ppm to 1,500 ppm based on a total weight of the lithium-rich transition metal oxide.

12. The method of claim 9, wherein the heat treatment is performed at a temperature of 300°C to 450°C.

13. The method of claim 9, wherein, when the dry-mixing of the lithium-containing raw material and the transition metal-containing raw material is performed, a doping element-containing raw material is further mixed.

14. A positive electrode comprising the positive electrode active material of any one of claims 1 to 8.

15. A lithium secondary battery comprising the positive electrode of claim 14.
